# FASCICULE DE BREVET EUROPEEN

(11) **EP 3 921 694 B1**
(45) Date de publication et mention de la délivrance du brevet: **18.12.2024**
(21) Numéro de dépôt: 20703461.2
(22) Date de dépôt: 05.02.2020
(51) Int. Cl.: G02B 27/01, G02B 27/00, G02B 27/28

(54) **ENSEMBLE D'AFFICHAGE ET COMBINÉ D'INSTRUMENTS**
ANZEIGEEINHEIT UND KOMBIINSTRUMENT
DISPLAY UNIT AND INSTRUMENT CLUSTER

(30) Priorité: 07.02.2019 FR 1901219
(43) Date de publication de la demande: 15.12.2021
(73) Titulaire: Valeo Comfort and Driving Assistance, 94000 Créteil (FR)
(72) Inventeur: IRZYK, Michael, 94046 Créteil CEDEX (FR)
(74) Mandataire: Delplanque, Arnaud
(86) Numéro de dépôt international: PCT/EP2020/052864
(87) Numéro de publication internationale: WO 2020/161185

(56) Documents cités:
- US-A1- 2016 097 928
- US-B1- 6 842 292
- US-B2- 7 482 996

## Description

La présente invention concerne le domaine technique de l'affichage d'informations, notamment au sein des véhicules (en particulier des véhicules automobiles).

La présente invention concerne en particulier un ensemble d'affichage et un combiné d'instruments.

Les planches de bord des véhicules (en particulier des véhicules automobiles) sont équipées d'un combiné d'instruments permettant au conducteur du véhicule de visualiser des informations relatives par exemple au fonctionnement du véhicule ou à un trajet emprunté par ce véhicule.

Diverses solutions ont été envisagées pour réaliser ce combiné d'instruments. Il a notamment été proposé d'intégrer au combiné d'instruments un écran situé face au conducteur afin d'afficher certaines au moins des informations précitées à destination du conducteur.

US 6 842 292 B1 décrit un module d'affichage pour véhicule.

Dans ce contexte, l'invention concerne un ensemble d'affichage pour planche de bord comprenant un écran rétroéclairé par une source de lumière et produisant un faisceau lumineux polarisé selon une direction de polarisation ; un objet présentant une surface exposée en direction d'une zone d'observation ; une lame interposée entre l'objet et la zone d'observation, dans lequel la lame présente un coefficient de réflexion supérieur à 15% pour la lumière polarisée selon ladite direction de polarisation et un coefficient de réflexion inférieur à 15% pour la lumière polarisée selon une direction perpendiculaire à ladite direction de polarisation, et dans lequel la lame est orientée de manière à réfléchir au moins en partie le faisceau lumineux en direction de la zone d'observation.

L'ensemble d'affichage comprend un capteur d'image orienté vers la zone d'observation et monté dans la planche de bord de manière à interposer la lame entre le capteur d'image et la zone d'observation.

Ainsi, le faisceau lumineux produit par l'écran est en partie réfléchi en direction de la zone d'observation : une image virtuelle (dont le contenu est variable par commande de l'écran) se forme derrière la lame et l'œil du conducteur placé dans la zone d'observation peut voir cette image virtuelle.

Par ailleurs, une partie de la lumière (en particulier la lumière polarisée selon la direction perpendiculaire susmentionnée) n'est pas réfléchie par la lame ; ainsi, une partie de la lumière émise (ou ré-émise, par exemple diffusée) par l'objet peut alors traverser la lame en direction de la zone d'observation, de sorte que cet objet est visible par le conducteur.

Selon d'autres caractéristiques envisageables à titre optionnel :
- la lame présente un coefficient de réflexion inférieur à 45% (par exemple compris entre 20% et 45%) pour la lumière polarisée selon ladite direction de polarisation, ce qui permet d'obtenir un coefficient de réflexion moyen (toutes polarisation confondues) peu élevé (inférieur à 30%) de sorte que la lame est peu visible par l'œil du conducteur ;
- une face de la lame tournée vers l'écran comporte un film présentant un coefficient de réflexion supérieur à 15% pour la lumière polarisée selon ladite direction de polarisation et un coefficient de réflexion inférieur à 15% pour la lumière polarisée perpendiculairement à ladite direction de polarisation ;
- l'écran (par exemple un écran à cristaux liquides) comprend un polariseur de sortie ;
- ladite direction de polarisation est parallèle au plan d'incidence du faisceau lumineux sur la lame (faisceau lumineux polarisé P), ladite direction de polarisation pouvant toutefois en variante être perpendiculaire au plan d'incidence du faisceau lumineux sur la lame (faisceau lumineux polarisé S) ;
- la lame présente un coefficient de réflexion supérieur à 15% (par exemple compris entre 15% et 45%, voire entre 20% et 45%) pour le faisceau lumineux polarisé ;
- l'ensemble d'affichage comprend un indicateur lumineux conçu pour émettre un rayon lumineux sensiblement parallèle au faisceau lumineux et polarisé selon ladite direction de polarisation ;
- l'objet susmentionné est une partie de ladite planche de bord (par exemple le fond d'une concavité ou un prolongement d'une surface externe de la planche de bord, laquelle surface externe peut porter l'écran susmentionné, comme expliqué dans la suite) ;
- l'objet est un autre écran produisant un autre faisceau lumineux en direction de la lame ;
- l'autre faisceau lumineux est polarisé selon une direction perpendiculaire à ladite direction de polarisation ;
- l'autre faisceau lumineux est polarisé selon ladite direction de polarisation et/ou une face de la lame tournée vers l'autre écran comporte un film quart d'onde ;
- une face de la lame tournée vers ledit objet comporte un filtre absorbant la lumière polarisée perpendiculairement à ladite direction de polarisation.
- la lame présente un coefficient de transmission supérieur à 85% pour la lumière polarisée perpendiculairement à ladite direction de polarisation de sorte que cette lame transmet quasiment la totalité de la lumière polarisée perpendiculairement à ladite direction de polarisation ;
- l'ensemble d'affichage comprend un témoin lumineux monté dans la planche de bord pour émettre un rayon lumineux en direction de la face de la lame tournée vers ledit objet ;
- l'ensemble d'affichage comprend un illuminateur infrarouge monté dans la planche de bord de manière à interposer la lame entre l'illuminateur infrarouge et la zone d'observation, et/ou le capteur d'image est sensible au rayonnement infrarouge ;
- l'ensemble d'affichage comprend un illuminateur produisant une lumière polarisée perpendiculairement à ladite direction de polarisation, et/ou l'illuminateur est monté dans la planche de bord de manière à interposer la lame entre l'illuminateur et la zone d'observation, et/ou le capteur d'image est sensible au rayonnement visible ;
- la face de la lame tournée vers ledit objet comporte un revêtement antireflet.

L'invention propose également un combiné d'instruments comprenant un ensemble d'affichage tel que mentionné ci-dessus.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] représente une planche de bord comprenant un ensemble d'affichage selon un premier mode de réalisation de l'invention,
[Fig. 2] représente les éléments principaux d'un écran de l'ensemble d'affichage de la figure 1,
[Fig. 3] représente une planche de bord comprenant un ensemble d'affichage selon un second mode de réalisation de l'invention,
[Fig. 4] représente une planche de bord comprenant un ensemble d'affichage selon un troisième mode de réalisation de l'invention,
[Fig. 5] représente une planche de bord comprenant un ensemble d'affichage selon un quatrième mode de réalisation de l'invention,
[Fig. 6] représente une planche de bord comprenant un ensemble d'affichage selon un cinquième mode de réalisation de l'invention,
[Fig. 7] représente une planche de bord comprenant un ensemble d'affichage selon un sixième mode de réalisation de l'invention.

On décrit dans la suite différents modes de réalisation d'un ensemble d'affichage pour planche de bord. Les éléments communs à plusieurs modes de réalisation seront désignés dans la suite par la même référence numérique, quel que soit le mode de réalisation concerné.

Dans ces modes de réalisation, un afficheur 2 est intégré à une planche de bord 1 et produit un faisceau lumineux polarisé L en direction d'une lame 4.

La lame 4 est par ailleurs interposée entre un objet (par exemple une partie 14, 19 de la planche de bord 1ou un autre écran 30, comme décrit ci-dessous) et une zone d'observation Z où est placé un oeil O du conducteur en position de conduite.

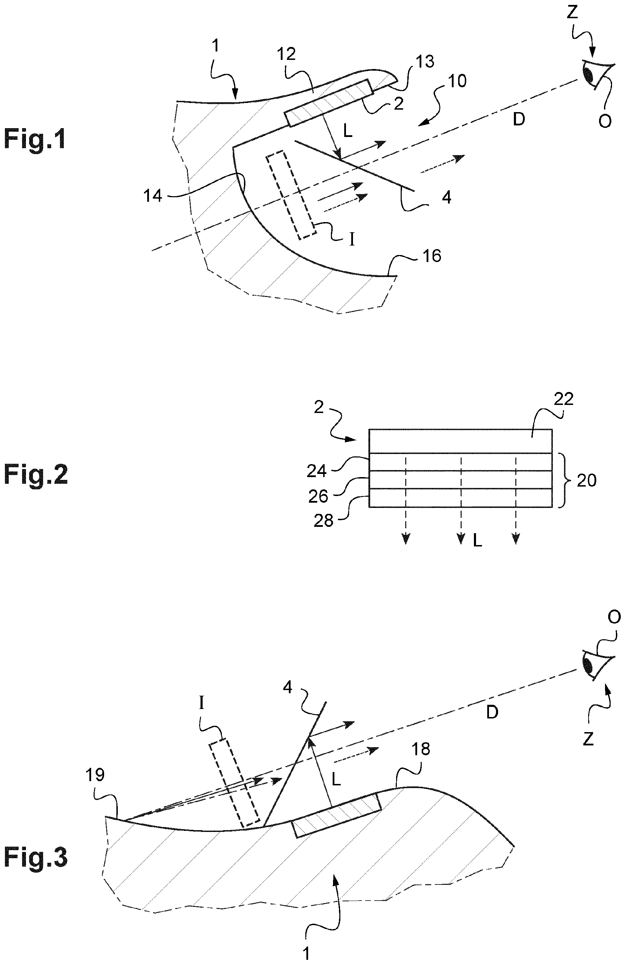

Comme représenté schématiquement en figure 2 (et pour tous les modes de réalisation décrits), l'afficheur 2 comprend une source de lumière 22 (comprenant par exemple une ou plusieurs diodes électroluminescentes et/ou un réflecteur) et un écran 20 rétroéclairé par la source de lumière 22. (On peut en pratique prévoir une source de lumière 22 adaptative, segmentée par exemple en plusieurs parties dont seules celles correspondant à des pixels ou ensembles de pixels actifs, à rétroéclairer, sont activées à un instant donné.)

L'écran 20 comprend au moins un polariseur 28 (ici un polariseur de sortie 28 comme expliqué ci-dessous) de sorte que le faisceau lumineux L produit en sortie de l'écran 20 est polarisé selon une direction de polarisation donnée.

Le faisceau lumineux L est par exemple polarisé P, c'est-à-dire que la direction de polarisation du faisceau lumineux L est parallèle à son plan d'incidence sur la lame 4 (à savoir ici située dans un plan vertical contenant la direction d'avancement du véhicule). En variante, le faisceau lumineux L pourrait être polarisé S, c'est-à-dire que la direction de polarisation du faisceau lumineux L est orthogonale à son plan d'incidence sur la lame 4 (à savoir ici orthogonale à un plan vertical contenant la direction d'avancement du véhicule).

L'écran 20 est par exemple un écran à cristaux liquides (couramment désigné "*écran LCD*" pour "*Liquid Crystal Display*")*.* L'écran 20 peut alors comprendre un polariseur d'entrée 24, une matrice de cellules à cristaux liquides 26 et le polariseur de sortie 28 déjà mentionné.

La direction de polarisation du polariseur d'entrée 24 est perpendiculaire à la direction de polarisation du polariseur de sortie 28. Par ailleurs, un circuit de commande (non représenté) peut commander individuellement chaque cellule de la matrice 26 de sorte que chaque cellule modifie de manière réglable la polarisation de la lumière qui la traverse. Le circuit de commande (non représenté) permet ainsi de régler la quantité de lumière qui traverse l'écran 20 au niveau de chaque cellule de la matrice 26 et ainsi de former (à chaque instant) un faisceau lumineux L représentant une image (les pixels de l'image correspondant aux cellules de la matrice 26).

Dans les modes de réalisation des figures 1 et 4 à 7, la planche de bord 1 définit une concavité 10 tournée vers la zone d'observation Z (où est situé l'œil O du conducteur comme déjà indiqué).

Précisément, la planche de bord 1 comprend une paroi supérieure 12, un fond 14 et une partie inférieure 16 qui entourent partiellement la concavité 10, la concavité 10 étant en revanche ouverte en direction de la zone d'observation Z.

Comme expliqué dans la suite, la concavité 10, l'afficheur 2 et la lame 4 (ainsi qu'éventuellement d'autres éléments comme décrit plus bas) peuvent ainsi former un combiné d'instruments destiné au conducteur.

Dans les modes de réalisation des figures 1 et 4 à 7, l'afficheur 2 est monté sur une face inférieure 13 de la paroi supérieure 12 de sorte que le faisceau lumineux L produit par l'écran 20 se propage vers l'intérieur de la concavité 10 (en étant par exemple perpendiculaire à la face inférieure 13 de la paroi supérieure 12). La lame 4 est alors située dans la concavité 10.

Dans le mode de réalisation de la figure 3 en revanche, l'afficheur 2 est monté au niveau d'une surface externe 18 de la planche de bord 1, cette surface externe 18 étant globalement orientée vers le haut (dans l'habitacle du véhicule équipé de la planche de bord 1) de sorte que le faisceau lumineux L produit par l'écran 20 est émis vers le haut (ici de manière légèrement oblique par rapport à la verticale) en direction de la lame 4.

La lame 4 comprend un corps globalement transparent (réalisé par exemple en verre, en céramique transparente ou en matière plastique transparente telle que le polycarbonate ou le polyméthacrylate de méthyle) et, sur sa face tournée vers l'afficheur 2 et la zone d'observation Z, un film de réflexion sélective en polarisation. Ce film est par exemple une variation de structures multicouches telle que celle utilisée dans les miroirs polarisants réfléchissants (ou RPM pour "*Reflective Polzarizer Mirror*") ou les films pour pare-brise combineur (ou WCF pour "*Windshield Combiner Film*")*,* produits par exemple par la société 3M^{®}.

Le film précité est choisi de sorte que la lame 4 présente (au niveau du film) un coefficient de réflexion compris entre 15% et 60% pour la lumière polarisée selon la direction de polarisation du faisceau lumineux polarisé L ; la lame 4 présente un coefficient de réflexion inférieur à 15% pour la lumière polarisée perpendiculairement à la direction de polarisation du faisceau lumineux polarisé L de sorte que la lame 4 laisse passer (i.e. transmet), au moins au niveau de son interface située du côté de l'afficheur 2 et de la zone d'observation Z, la quasi-totalité de la lumière polarisée perpendiculairement à la direction de polarisation du faisceau lumineux polarisé L.

De préférence, le coefficient de réflexion précité est compris entre 15% et 45% (entre 20% et 45% dans l'exemple décrit) pour la lumière polarisée selon la direction de polarisation du faisceau polarisé L de sorte que le coefficient de réflexion moyen (toutes polarisations confondues) est peu élevé (inférieur à 30% et compris en pratique entre 10% et 30%). De cette manière, la lame 4 sera peu visible par le conducteur.

Ainsi, le coefficient de transmission du film pour la lumière polarisée selon la direction de polarisation du faisceau lumineux polarisé L (lumière polarisée P dans l'exemple décrit ici) est compris entre 40% et 85% (de préférence entre 55% et 85%, et même entre 55% et 80% dans l'exemple décrit) et le coefficient de transmission du film pour la lumière polarisée perpendiculairement à la direction de polarisation du faisceau lumineux polarisé L (coefficient de transmission pour la lumière polarisée S dans l'exemple décrit ici) est supérieur à 85%.

Comme déjà indiqué, dans l'exemple décrit ici, le faisceau lumineux L est polarisé P et le film est donc choisi de sorte que la lame 4 réfléchisse une partie non-négligeable de la lumière polarisée P et transmette (au niveau du film, c'est-à-dire ici de l'interface de la lame 4 située vers l'afficheur 2 et la zone d'observation 2) la quasi-totalité de la lumière polarisée S.

La lame 4 est par ailleurs orientée de sorte que le faisceau lumineux polarisé L soit réfléchi (en partie et par la lame 4, ici au moyen du film précité) , selon une direction D, en direction de la zone d'observation Z de manière à former une image virtuelle I pour l'œil O du conducteur (l'image virtuelle I correspond à l'image représentée par le faisceau lumineux L comme indiqué plus haut). L'image virtuelle I contient des informations destinées au conducteur du véhicule, par exemple sous forme de symboles réglementaires et/ou d'un indicateur de vitesse et/ou d'un indicateur de régime-moteur et/ou d'un indicateur de défaut.

Dans l'exemple décrit ici, le faisceau lumineux L forme un angle droit avec la direction D de sa propagation ultérieure en direction de la zone d'observation Z. La lame 4 forme donc un angle de 45° avec le faisceau lumineux L et avec la direction D pour obtenir la réflexion du faisceau lumineux L selon la direction D.

Les deux faces de la lame 4 peuvent en pratique former entre elles un angle non-nul faible (par exemple de l'ordre de quelques milliradians) afin de superposer pour l'œil O du conducteur les images respectivement générées par les deux interfaces de la lame 4 et d'éviter ainsi la présence d'une image fantôme.

La face de la lame 4 opposée à la zone d'observation Z (c'est-à-dire la face de la lame 4 tournée vers l'avant dans la direction d'avancement du véhicule, ou encore la face de la lame 4 tournée vers le fond 14 de la concavité 10 dans les modes de réalisation des figures 1 et 4 à 7) peut comporter en pratique un revêtement antireflet, ce qui permet notamment d'éviter la formation d'une image fantôme par l'interface concernée.

Selon une variante de réalisation, cette fac e opposée à la zone d'observation Z pourrait comprendre en outre un film absorbant la lumière polarisée perpendiculairement à la direction de polarisation du faisceau lumineux polarisé L (c'est-à-dire ici un film absorbant la lumière polarisée S), afin notamment d'améliorer le contraste pour l'image virtuelle I. Sauf indication spécifique, on considérera toutefois dans la suite que la face de la lame 4 opposée à la zone d'observation Z ne comporte pas un tel film absorbant, mais seulement un revêtement antireflet.

Du fait des propriétés de la lame 4 qui viennent d'être présentées, un objet 14, 19, 30 situé derrière la lame 4 par rapport à l'œil O du conducteur est visible à travers la lame 4 (selon la direction D susmentionnée).

En effet, une surface libre de l'objet 14, 19, 30 exposée en direction de la direction D, c'est-à-dire en direction de la zone d'observation Z (où est situé l'œil O du conducteur), émet (ou ré-émet) de la lumière en direction de la zone d'observation Z, lumière dont la composante polarisée perpendiculairement à la direction de polarisation du faisceau lumineux polarisé L (c'est-à-dire la composante polarisée S dans l'exemple décrit ici) est très majoritairement transmise à travers la lame 4. On a représenté par des flèches pointillées sur les figures la composante polarisée perpendiculairement à la direction de polarisation du faisceau lumineux polarisé L, c'est-à-dire ici la composante polarisée S.

Par ailleurs, la composante de cette même lumière polarisée selon la direction de polarisation du faisceau lumineux polarisé L (ici la composante polarisée P) est ici également transmise en proportion non négligeable (le coefficient de transmission du film pour la lumière polarisée P étant d'au moins 40%, et même supérieur à 55% dans l'exemple décrit ici où le coefficient de réflexion correspondant est inférieur à 45% comme indiqué plus haut).

Dans le mode de réalisation des figures 1 et 4 à 7, l'objet visible par le conducteur à travers la lame 4 est le fond 14 de la concavité 10.

Dans le mode de réalisation de la figure 3, l'objet visible par le conducteur à travers la lame 4 est un prolongement 19 de la surface externe 18 de la planche de bord 1.

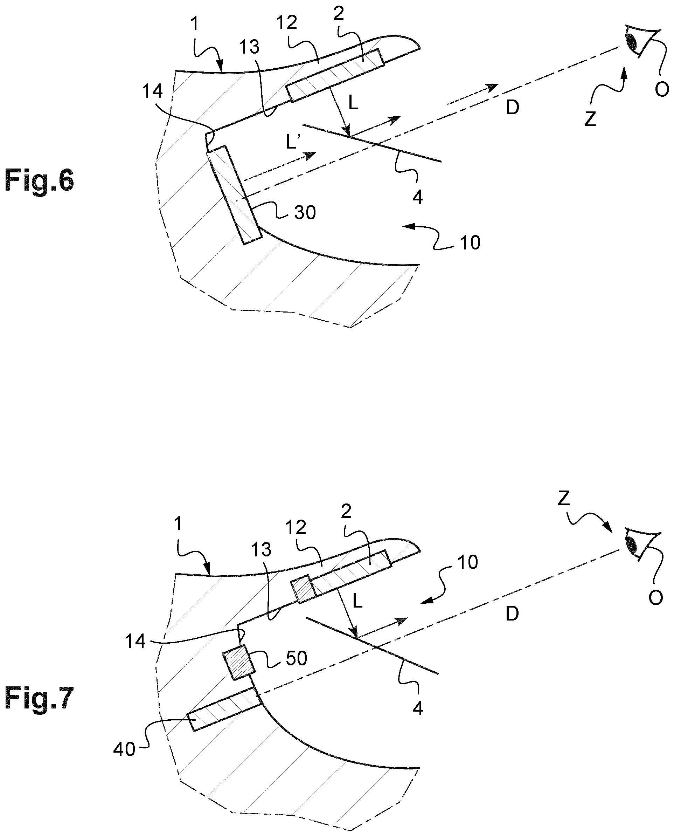

Dans le mode de réalisation de la figure 6, un écran supplémentaire 30 forme également un objet visible par le conducteur à travers la lame 4 (un faisceau lumineux L' produit par cet écran supplémentaire 30 sortant par la surface libre de l'écran supplémentaire 30 dirigée vers la zone d'observation O).

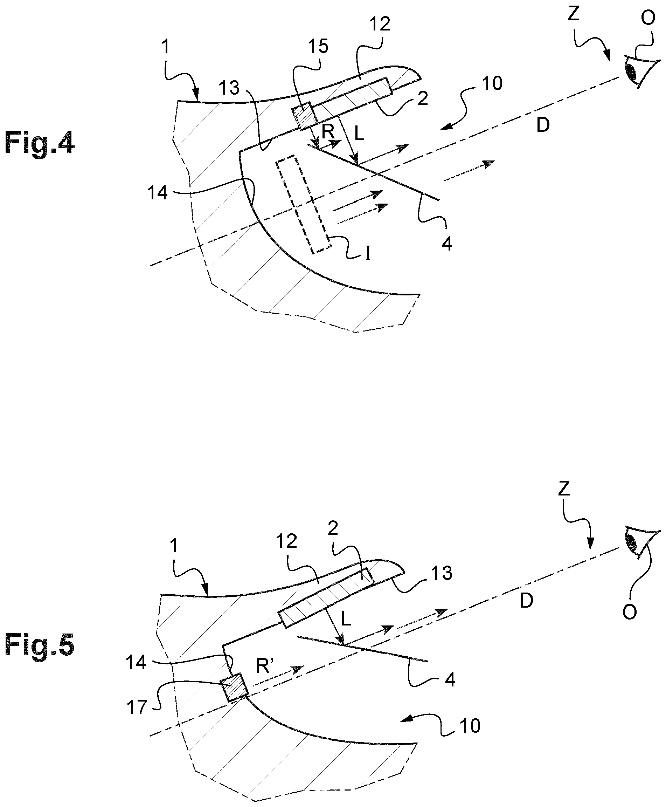

Comme schématiquement représenté sur les figures 1, 3 et 4, la lame 4 est par ailleurs située (au sein de la concavité 10 pour les figures 1 et 4) de sorte que l'image virtuelle I soit formée (par réflexion du faisceau lumineux L sur la lame 4) entre l'objet 14, 19, 30 et la lame 4, c'est-à-dire devant l'objet 14, 19, 30 pour l'œil O du conducteur.

L'objet susmentionné (écran supplémentaire 30 ou partie de la planche de bord 1 telle que le fond 14 de la concavité 10 ou le prolongement 19) est donc visible par le conducteur derrière l'image virtuelle I. Dans le cas où c'est une partie de la planche de bord 1 qui est visible derrière l'image virtuelle I, on peut prévoir par exemple de donner un aspect esthétique particulier à cette partie de la planche de bord 1, par exemple en réalisant cette partie de planche de bord 1 en bois ou en cuir.

Dans le mode de réalisation de la figure 4, un indicateur lumineux 15 est monté dans la planche de bord 1, ici sur la face inférieure 13 de la paroi supérieure 12 et/ou à proximité de l'afficheur 2, de manière à émettre un rayon lumineux R sensiblement parallèle au faisceau lumineux L, en direction de la lame 4.

L'indicateur lumineux 15 comprend par exemple au moins une diode électroluminescente et/ou des moyens de polarisation de sorte que le rayon lumineux R est polarisé selon une direction de polarisation identique à la direction de polarisation du faisceau lumineux L. (Dans l'exemple décrit ici, le rayon lumineux R est donc polarisé P.)

Le rayon lumineux R est ainsi en partie réfléchi par la lame 4 en direction de la zone d'observation O où il sera visible par le conducteur.

Dans le mode de réalisation de la figure 5, un témoin lumineux 17 est monté dans la planche de bord 1, ici au niveau du fond 14 de la concavité 10, de manière à émettre un rayon lumineux R' en direction de la face de la lame 4 tournée vers le fond 14 de la concavité.

Le témoin lumineux 17 comprend par exemple au moins une diode électroluminescente et/ou des moyens de polarisation de sorte que le rayon lumineux R' est polarisé selon une direction de polarisation perpendiculaire à la direction de polarisation du faisceau lumineux L. (Dans l'exemple décrit ici, le rayon lumineux R' est donc polarisé S.) Le rayon lumineux R' est donc transmis à travers la lame 4 en direction de la zone d'observation Z (où est situé l'œil O du conducteur). On remarque qu'il est envisageable en variante d'utiliser un rayon lumineux R' non polarisé (dont la composante S est alors majoritairement transmise à travers la lame 4) ; la composante P d'un tel rayon lumineux R' est toutefois en partie réfléchie par la lame 4 et génère alors un éclairement parasite derrière la lame 4 (vu du conducteur).

Dans le mode de réalisation de la figure 6, comme déjà indiqué, l'objet visible par l'utilisateur à travers la lame 4 est un écran supplémentaire 30 produisant un faisceau lumineux L' en direction de la lame 4.

Selon une première possibilité de réalisation, l'écran supplémentaire 30 est conçu de sorte que le faisceau lumineux L' est polarisé selon une direction perpendiculaire à la direction de polarisation du faisceau lumineux L. Pour ce faire par exemple, l'écran supplémentaire est un écran à cristaux liquides avec un polariseur de sortie polarisé selon cette direction perpendiculaire à la direction de polarisation du faisceau lumineux L. (Dans l'exemple décrit ici, le faisceau lumineux L' en sortie de l'écran supplémentaire 30 est polarisé S.)

Grâce aux propriétés de la lame 4 présentées plus haut, le faisceau lumineux L' est transmis par la lame 4 en direction de la zone d'observation O (c'est-à-dire ici selon la direction D susmentionnée).

Selon une seconde possibilité de réalisation, l'écran supplémentaire 30 est conçu de sorte que le faisceau lumineux L' est polarisé selon une direction de polarisation identique à la direction de polarisation du faisceau lumineux L. On prévoit dans ce cas que la face de la lame tournée vers l'écran supplémentaire 30 comporte un film quart d'onde (lequel modifie la polarisation du faisceau incident).

Ainsi, après traversée du film quart d'onde, la faisceau lumineux L' est polarisé selon une direction de polarisation perpendiculaire à la direction de polarisation du faisceau lumineux L et sera donc majoritairement transmis par le film déposé sur la face de la lame 4 tournée vers l'afficheur 2 et la zone d'observation Z.

Ainsi, selon les deux possibilités de réalisation qui viennent d'être envisagées, l'œil O du conducteur (situé dans la zone d'observation Z) reçoit la combinaison du faisceau lumineux L produit par l'écran 20 de l'afficheur 2 (et réfléchi sur la lame 4) et du faisceau lumineux L' produit par l'écran supplémentaire 30 (et transmis à travers la lame 4).

Il est alors possible, en disposant l'afficheur 2 et la lame 4 de manière à générer une image virtuelle légèrement décalée par rapport à la face de sortie de l'écran supplémentaire 30, de présenter au conducteur une image comportant deux plans distincts perçus à des profondeurs (légèrement) différentes et de donner une impression d'affichage tridimensionnel au conducteur.

Dans le mode de réalisation de la figure 7, un capteur d'image 40 (par exemple une caméra vidéo) est monté sur la planche de bord 1, ici dans le fond 14 de la concavité 10. En variante, on pourrait prévoir, à côté ou, dans une variante non-revendiquée, en lieu et place du capteur d'image 40, un capteur de luminosité afin de mesurer la luminosité dans l'habitacle.

La lame 4 est ainsi interposée entre ce capteur d'image 40 (ou en variante de luminosité) et la zone d'observation Z, où est situé l'œil O du conducteur.

Le capteur d'image 40 peut ainsi être orienté vers la zone d'observation Z et être utilisé par exemple dans un système de surveillance du conducteur. Un tel système de surveillance du conducteur est par exemple conçu pour prendre au moins une image (au moyen du capteur d'images 40) d'une partie du corps du conducteur (ici du visage du conducteur), pour analyser l'image (ou les images) prise(s) et pour déterminer un niveau d'inaptitude à la conduite (en pratique un niveau de somnolence et/ou un niveau de distraction) en fonction de l'analyse effectuée.

Un tel système de surveillance peut comprendre un illuminateur 50 conçu pour transmettre un rayonnement donné en direction du conducteur (afin notamment de permettre un fonctionnement de nuit). L'illuminateur 50 peut alors être monté dans la planche de bord 1 de sorte que la lame 4 soit interposée entre l'illuminateur 50 et la zone d'observation Z.

Selon une première possibilité de réalisation, cet illuminateur 50 est un illuminateur infrarouge. On peut prévoir dans ce cas que la lame 4 (et en particulier le film de réflexion sélective en polarisation, déposé sur la lame 4) laisse passer le rayonnement infrarouge (en direction de la zone d'observation Z et donc du conducteur). Le capteur d'image 40 est dans ce cas sensible au rayonnement infrarouge.

Selon une seconde possibilité de réalisation, l'illuminateur 50 produit une lumière polarisée perpendiculairement à la direction de polarisation du faisceau lumineux L de sorte que cette lumière polarisée (ici polarisée S) produite par l'illuminateur 50 est principalement transmise à travers la lame 4, en direction de la zone d'observation Z et donc du conducteur). Le capteur d'image 40 est dans ce cas sensible au rayonnement visible.

## Revendications

1. Ensemble d'affichage pour planche de bord (1) comprenant :
- un écran (20) rétroéclairé par une source de lumière (22) et produisant un faisceau lumineux (L) polarisé selon une direction de polarisation ;
- un objet (14 ; 19 ; 30) présentant une surface exposée en direction d'une zone d'observation (Z) ;
- une lame (4) interposée entre l'objet (14 ; 19 ; 30) et la zone d'observation (Z), dans lequel la lame (4) présente un coefficient de réflexion supérieur à 15% pour la lumière polarisée selon ladite direction de polarisation et un coefficient de réflexion inférieur à 15% pour la lumière polarisée selon une direction perpendiculaire à ladite direction de polarisation, et
dans lequel la lame (4) est orientée de manière à réfléchir au moins en partie le faisceau lumineux (L) en direction de la zone d'observation (Z), l'ensemble d'affichage étant **caractérisé en ce qu'**il comprend un capteur d'image (40) orienté vers la zone d'observation (Z) et monté dans la planche de bord (1) de manière à interposer la lame (4) entre le capteur d'image (40) et la zone d'observation (Z).

2. Ensemble d'affichage selon la revendication 1, dans lequel la lame (4) présente un coefficient de réflexion inférieur à 45% pour la lumière polarisée selon ladite direction de polarisation.

3. Ensemble d'affichage selon la revendication 1 ou 2, dans lequel une face de la lame (4) tournée vers l'écran (20) comporte un film présentant un coefficient de réflexion supérieur à 15% pour la lumière polarisée selon ladite direction de polarisation et un coefficient de réflexion inférieur à 15% pour la lumière polarisée selon une direction perpendiculaire à ladite direction de polarisation.

4. Ensemble d'affichage selon l'une des revendications 1 à 3, dans lequel l'écran (20) comprend un polariseur de sortie (28).

5. Ensemble d'affichage selon l'une des revendications 1 à 4, dans lequel ladite direction de polarisation est parallèle au plan d'incidence du faisceau lumineux (L) sur la lame (4).

6. Ensemble d'affichage selon l'une des revendications 1 à 5, dans lequel la lame (4) présente un coefficient de réflexion supérieur à 15% pour le faisceau lumineux polarisé (L).

7. Ensemble d'affichage selon l'une des revendications 1 à 6, comprenant un indicateur lumineux (15) conçu pour émettre un rayon lumineux (R) sensiblement parallèle au faisceau lumineux (L) et polarisé selon ladite direction de polarisation.

8. Ensemble d'affichage selon l'une des revendications 1 à 7, dans lequel l'objet est une partie (14 ; 19) de ladite planche de bord (1).

9. Ensemble d'affichage selon l'une des revendications 1 à 7, dans lequel l'objet est un autre écran (30) produisant un autre faisceau lumineux (L') en direction de la lame (4).

10. Ensemble d'affichage selon la revendication 9, dans lequel l'autre faisceau lumineux (L') est polarisé selon une direction perpendiculaire à ladite direction de polarisation.

11. Ensemble d'affichage selon la revendication 9, dans lequel l'autre faisceau lumineux (L') est polarisé selon ladite direction de polarisation et dans lequel une face de la lame (4) tournée vers l'autre écran (30) comporte un film quart d'onde.

12. Ensemble d'affichage selon l'une des revendications 1 à 8, dans lequel une face de la lame (4) tournée vers ledit objet (14 ; 19) comporte un filtre absorbant la lumière polarisée perpendiculairement à ladite direction de polarisation.

13. Ensemble d'affichage selon l'une des revendications 1 à 11, dans lequel la lame (4) présente un coefficient de transmission supérieur à 85% pour la lumière polarisée perpendiculairement à ladite direction de polarisation.

14. Ensemble d'affichage selon l'une des revendications 1 à 13, comprenant un témoin lumineux (17) monté dans la planche de bord (1) pour émettre un rayon lumineux (R') en direction de la face de la lame (4) tournée vers ledit objet (14 ;19 ; 30).

15. Ensemble d'affichage selon l'une des revendications 1 à 14, comprenant un illuminateur infrarouge (50) monté dans la planche de bord (1) de manière à interposer la lame (4) entre l'illuminateur infrarouge (50) et la zone d'observation (Z), et dans lequel le capteur d'image (40) est sensible au rayonnement infrarouge.

16. Ensemble d'affichage selon l'une des revendications 1 à 14, comprenant un illuminateur (50) produisant une lumière polarisée perpendiculairement à ladite direction de polarisation, dans lequel l'illuminateur (50) est monté dans la planche de bord (1) de manière à interposer la lame (4) entre l'illuminateur (50) et la zone d'observation (Z), et dans lequel le capteur d'image (40) est sensible au rayonnement visible.

17. Ensemble d'affichage selon l'une des revendications 1 à 16, dans lequel la face de la lame (4) tournée vers ledit objet (14 ; 19 ; 30) comporte un revêtement antireflet.

18. Combiné d'instruments comprenant un ensemble d'affichage selon l'une des revendications 1 à 17.

## Patentansprüche

1. Anzeigeeinheit für ein Armaturenbrett (1), umfassend:
- einen Bildschirm (20), der von einer Lichtquelle (22) hinterleuchtet wird und ein entlang einer Polarisationsrichtung polarisiertes Lichtbündel (L) erzeugt;
- einen Gegenstand (14; 19; 30), der eine in Richtung eines Betrachtungsbereichs (Z) exponierte Oberfläche aufweist;
- eine Scheibe (4), die zwischen dem Gegenstand (14; 19; 30) und dem Betrachtungsbereich (Z) angeordnet ist, wobei die Scheibe (4) einen Reflexionskoeffizienten von mehr als 15 % für das entlang der Polarisationsrichtung polarisierte Licht und einen Reflexionskoeffizienten von weniger als 15 % für das entlang einer senkrecht zu der Polarisationsrichtung verlaufenden Richtung polarisierte Licht aufweist, und
wobei die Scheibe (4) so ausgerichtet ist, dass das Lichtbündel (L) mindestens teilweise in Richtung des Betrachtungsbereichs (Z) reflektiert wird, wobei die Anzeigeeinheit **dadurch gekennzeichnet ist, dass** sie einen Bildsensor (40) umfasst, der zu dem Betrachtungsbereich (Z) ausgerichtet ist, und
in das Armaturenbrett (1) so eingebaut ist, dass die Scheibe (4) zwischen dem Bildsensor (40) und dem Betrachtungsbereich (Z) angeordnet ist.

2. Anzeigeeinheit nach Anspruch 1, wobei die Scheibe (4) einen Reflexionskoeffizienten von weniger als 45 % für das entlang der Polarisationsrichtung polarisierte Licht aufweist.

3. Anzeigeeinheit nach Anspruch 1 oder 2, wobei eine Seite der Scheibe (4), die zu dem Bildschirm (20) hin gewandt ist, eine Folie beinhaltet, die einen Reflexionskoeffizienten von mehr als 15 % für das entlang der Polarisationsrichtung polarisierte Licht aufweist und einen Reflexionskoeffizienten von weniger als 15 % für das entlang einer senkrecht zu der Polarisationsrichtung verlaufenden Richtung polarisierte Licht aufweist.

4. Anzeigeeinheit nach einem der Ansprüche 1 bis 3, wobei der Bildschirm (20) einen Ausgangspolarisator (28) umfasst.

5. Anzeigeeinheit nach einem der Ansprüche 1 bis 4, wobei die Polarisationsrichtung parallel zu der Einfallsebene des Lichtbündels (L) auf der Scheibe (4) ist.

6. Anzeigeeinheit nach einem der Ansprüche 1 bis 5, wobei die Scheibe (4) einen Reflexionskoeffizienten von mehr als 15 % für das polarisierte Lichtbündel (L) aufweist.

7. Anzeigeeinheit nach einem der Ansprüche 1 bis 6, umfassend einen Leuchtanzeiger (15), der dazu ausgestaltet ist, einen Lichtstrahl (R) zu emittieren, der im Wesentlichen parallel zu dem Lichtbündel (L) ist und entlang der Polarisationsrichtung polarisiert wird.

8. Anzeigeeinheit nach einem der Ansprüche 1 bis 7, wobei der Gegenstand ein Teil (14; 19) des Armaturenbretts (1) ist.

9. Anzeigeeinheit nach einem der Ansprüche 1 bis 7, wobei der Gegenstand ein weiterer Bildschirm (30) ist, der ein weiteres Lichtbündel (L') in Richtung der Scheibe (4) erzeugt.

10. Anzeigeeinheit nach Anspruch 9, wobei das weitere Lichtbündel (L') entlang einer senkrecht zu der Polarisationsrichtung verlaufenden Richtung polarisiert wird.

11. Anzeigeeinheit nach Anspruch 9, wobei das weitere Lichtbündel (L') entlang der Polarisationsrichtung polarisiert wird und wobei eine Seite der Scheibe (4), die zu dem weiteren Bildschirm (30) gewandt ist, eine Lambda/Viertel-Folie beinhaltet.

12. Anzeigeeinheit nach einem der Ansprüche 1 bis 8, wobei eine Seite der Scheibe (4), die zu dem Gegenstand (14; 19) hin gewandt ist, ein Filter beinhaltet, welches das senkrecht zu der Polarisationsrichtung polarisierte Licht absorbiert.

13. Anzeigeeinheit nach einem der Ansprüche 1 bis 11, wobei die Scheibe (4) einen Transmissionskoeffizienten von mehr als 85 % für das senkrecht zu der Polarisationsrichtung polarisierte Licht aufweist.

14. Anzeigeeinheit nach einem der Ansprüche 1 bis 13, umfassend eine Kontrollleuchte (17), die in das Armaturenbrett (1) eingebaut ist, um einen Lichtstrahl (R') in Richtung der Seite der Scheibe (4) zu emittieren, die zu dem Gegenstand (14; 19; 30) hin gewandt ist.

15. Anzeigeeinheit nach einem der Ansprüche 1 bis 14, umfassend eine Infrarot-Beleuchtungsvorrichtung (50), die so in das Armaturenbrett (1) eingebaut ist, dass die Scheibe (4) zwischen der Infrarot-Beleuchtungsvorrichtung (50) und dem Betrachtungsbereich (Z) angeordnet ist, und wobei der Bildsensor (40) empfindlich für die Infrarotstrahlung ist.

16. Anzeigeeinheit nach einem der Ansprüche 1 bis 14, umfassend eine Beleuchtungsvorrichtung (50), die ein senkrecht zu der Polarisationsrichtung polarisiertes Licht erzeugt, wobei die Beleuchtungsvorrichtung (50) so in das Armaturenbrett (1) eingebaut ist, dass die Scheibe (4) zwischen der Beleuchtungsvorrichtung (50) und dem Betrachtungsbereich (Z) angeordnet ist, und wobei der Bildsensor (40) empfindlich für die sichtbare Strahlung ist.

17. Anzeigeeinheit nach einem der Ansprüche 1 bis 16, wobei die Seite der Scheibe (4), die zu dem Gegenstand (14; 19; 30) hin gewandt ist, eine Antireflexbeschichtung beinhaltet.

18. Kombiinstrument, umfassend eine Anzeigeeinheit nach einem der Ansprüche 1 bis 17.

## Claims

1. Dashboard display assembly (1) comprising:
- a screen (20) that is backlit by a light source (22) and that produces a light beam (L) polarized in a polarization direction;
- an object (14; 19; 30) having an exposed surface in the direction of an observation zone (Z);
- a plate (4) interposed between the object (14; 19; 30) and the observation zone (Z), wherein the plate (4) has a reflection coefficient greater than 15% for light polarized in said polarization direction and a reflection coefficient less than 15% for light polarized in a direction perpendicular to said polarization direction, and
wherein the plate (4) is oriented so as to reflect at least in part the light beam (L) in the direction of the observation zone (Z), the display assembly being **characterized in that** it comprises an image sensor (40) oriented towards the observation zone (Z) and
mounted in the dashboard (1) so as to interpose the plate (4) between the image sensor (40) and the observation zone (Z).

2. Display assembly according to Claim 1, wherein the plate (4) has a reflection coefficient less than 45% for light polarized in said polarization direction.

3. Display assembly according to Claim 1 or 2, wherein a face of the plate (4) turned towards the screen (20) comprises a film having a reflection coefficient greater than 15% for light polarized in said polarization direction and a reflection coefficient less than 15% for light polarized in a direction perpendicular to said polarization direction.

4. Display assembly according to one of Claims 1 to 3, wherein the screen (20) comprises an exit polarizer (28).

5. Display assembly according to one of Claims 1 to 4, wherein said polarization direction is parallel to the plane of incidence of the light beam (L) on the plate (4) .

6. Display assembly according to one of Claims 1 to 5, wherein the plate (4) has a reflection coefficient greater than 15% for the polarized light beam (L).

7. Display assembly according to one of Claims 1 to 6, comprising a luminous indicator (15) designed to emit a light ray (R) substantially parallel to the light beam (L) and polarized in said polarization direction.

8. Display assembly according to one of Claims 1 to 7, wherein the object is a portion (14; 19) of said dashboard (1) .

9. Display assembly according to one of Claims 1 to 7, wherein the object is another screen (30) that produces another light beam (L') in the direction of the plate (4) .

10. Display assembly according to Claim 9, wherein the other light beam (L') is polarized in a direction perpendicular to said polarization direction.

11. Display assembly according to Claim 9, wherein the other light beam (L') is polarized in said polarization direction and wherein a face of the plate (4) turned towards the other screen (30) comprises a quarter-wave film.

12. Display assembly according to one of Claims 1 to 8, wherein a face of the plate (4) turned towards said object (14; 19) comprises a filter that absorbs light polarized perpendicular to said polarization direction.

13. Display assembly according to one of Claims 1 to 11, wherein the plate (4) has a transmission coefficient greater than 85% for light polarized perpendicular to said polarization direction.

14. Display assembly according to one of Claims 1 to 13, comprising an indicator light (17) mounted in the dashboard (1) so as to emit a light ray (R') in the direction of the face of the plate (4) turned towards said object (14; 19; 30).

15. Display assembly according to one of Claims 1 to 14, comprising an infrared illuminator (50) mounted in the dashboard (1) in such a way as to interpose the plate (4) between the infrared illuminator (50) and the observation zone (Z), and wherein the image sensor (40) is sensitive to infrared radiation.

16. Display assembly according to one of Claims 1 to 14, comprising an illuminator (50) that produces light polarized perpendicular to said polarization direction, wherein the illuminator (50) is mounted in the dashboard (1) in such a way as to interpose the plate (4) between the illuminator (50) and the observation zone (Z), and wherein the image sensor (40) is sensitive to visible radiation.

17. Display assembly according to one of Claims 1 to 16, wherein the face of the plate (4) turned towards said object (14; 19; 30) comprises an anti-reflection coating.

18. Instrument cluster comprising a display assembly according to one of Claims 1 to 17.
